# EUROPEAN PATENT APPLICATION

(11) **EP 1 754 877 A1**
(43) Date of publication of application: **21.02.2007**
(21) Application number: 06111106.8
(22) Date of filing: 14.03.2006
(51) Int. Cl.: F02G 1/02, F02G 5/02, F02G 5/04

(54) **Heat energy recovery apparatus**

(30) Priority: 01.04.2005 JP 2005106311
(71) Applicant: Toyota Jidosha Kabushiki Kaisha, Toyota-shi, Aichi-ken, 471-8571 (JP)
(72) Inventor: MITANI, Shinichi, Toyota-shi Aichi 471-8571 (JP); SAWADA, Daisaku, Toyota-shi Aichi 471-8571 (JP)
(74) Representative: TBK-Patent

(57) **Abstract**

A heat energy recovery apparatus includes a compressor (10); a heat exchanger (20; 120); an expander (30); a working gas exhaust pipe (15) which leads the working gas compressed by the compressor (10) to the heat exchanger (20; 120); a working gas exhaust path (15a) generally parallel to a direction of the thermal expansion of the heat exchanger (20; 120); an extending unit (18) extensible in the same direction as that of the thermal expansion when the heat exchanger (20; 120) expands thermally and tensile stress occurs in the working gas exhaust path (15a) with the thermal expansion of the heat exchanger (20; 120); and a shrinking unit (18) shrinkable in the same direction as that of the thermal expansion when the heat exchanger (20; 120) expands thermally and compressive stress occurs in the working gas exhaust path (15a) with the thermal expansion of the heat exchanger (20; 120).

## Description

### BACKGROUND OF THE INVENTION

### 1. Field of the Invention

The present invention relates to a heat energy recovery apparatus for converting thermal energy in which heat is absorbed by a heat exchanger to mechanical energy.

### 2. Description of the Related Art

Conventionally, there exists a heat cycle engine that converts thermal energy to mechanical energy.

For example, as this kind of a heat cycle engine, there is a Brayton cycle engine which includes a compressor which has a piston for adiabatically compressing sucked-in working fluid (working gas), a heat exchanger (heat source) which makes the working gas adiabatically compressed by the compressor absorb heat of high temperature fluid under isobaric pressure, and an expander which makes a piston move under pressure by adiabatic expansion of the working gas isobarically heat-received by the heat exchanger; and which takes out output from a crankshaft using the expansion force, as disclosed in Japanese Patent Application Laid-Open (JP-A) No. 6-257462.

As described, the heat cycle engine is to obtain output using expansion force of heated working gas and, for example, is able to construct as an exhaust heat recovery apparatus (heat energy recovery apparatus) for an internal combustion engine by using exhaust heat of exhaust gas of the internal combustion engine.

In addition, as such a heat cycle engine, there is a Stirling cycle engine in which heating from an external heat source to a cylinder sealed with working fluid (working gas) and cooling of the working gas expanded by this heating are repeated; and depressing of a piston due to expansion force of the working gas increased in temperature and ascending of the piston due to cooling of the expanded working gas are repeated, thereby taking out output from a crankshaft, as disclosed in JP-A No. 2002-266701.

However, since high temperature fluid such as exhaust gas discharged from an internal combustion engine, for example, flows into the aforementioned heat source, a heat exchanger expands thermally when the high temperature fluid flows in.

Meanwhile, for example, in the aforementioned Brayton cycle engine (heat energy recovery apparatus), in order to make working gas discharged from a compressor receive heat of the heat exchanger and supply the working gas after receiving the heat to an expander, connection are made between the compressor and the heat exchanger and between the expander and the heat exchanger via respective interconnecting pipings.

Here, since compressed working gas flows in the respective interconnecting pipings and working gas with high temperature further flows in the interconnecting pipings on the expander side, metal-made interconnecting pipings which have generally less impact on pressure and temperature of the working gas are used. For this reason, when a relative position relationship between the heat exchanger and the compressor or the expander and between the heat exchanger and the crankshaft is fixed, tensile stress or compressive stress occurs in the compressor and expander with thermal expansion of the heat exchanger. Especially, the tensile stress and/or compressive stress occur in the aforementioned interconnecting pipings of the compressor and expander, resulting in causing bends, torsions, or the like in the interconnecting pipings. Furthermore, bends, torsions, or the like also occur in a connecting rod and crankshaft of the compressor and expander with the generation of the tensile stress or compressive stress in the interconnecting pipings. Then, such bends and torsions cause strains in the heat energy recovery apparatus.

### SUMMARY OF THE INVENTION

Consequently, the present invention is to improve such conventional drawbacks and it is an object of the present invention to provide a heat energy recovery apparatus capable of relieving tensile stress and/or compressive stress generated with thermal expansion of a heat source.

A heat energy recovery apparatus according to one aspect of the present invention includes a compressor which has a piston for compressing sucked-in working gas; a heat exchanger which makes the working gas compressed by the compressor absorb heat of high temperature fluid; an expander which has a piston to be moved under pressure by expansion of the heat-absorbed working gas; a working gas exhaust pipe which leads the working gas compressed by the compressor to the heat exchanger; a working gas exhaust path, generally parallel to a direction of the thermal expansion of the heat exchanger, which is provided on at least one portion of the working gas exhaust pipe; a first extending unit, extensible in the same direction as that of the thermal expansion when the heat exchanger expands thermally and tensile stress occurs in the working gas exhaust path with the thermal expansion of the heat exchanger, which is provided on the working gas exhaust path; and a first shrinking unit, shrinkable in the same direction as that of the thermal expansion when the heat exchanger expands thermally and compressive stress occurs in the working gas exhaust path with the thermal expansion of the heat exchanger, which is provided on the working gas exhaust path.

According to this heat energy recovery apparatus, when the heat exchanger expands thermally, the direction of the thermal expansion is the same as the extension direction of the first extending unit or the shrinking direction of the first shrinking unit and therefore tensile stress or compressive stress in the working gas exhaust path, generated with thermal expansion can be absorbed.

In the heat energy recovery apparatus, the first extending unit may be pressured in an extension direction of the first extending unit with the flowing-in of the working gas.

According to this heat energy recovery apparatus, when the heat exchanger expands thermally, pressure is applied to the first extending unit in the same direction as that of the thermal expansion and therefore tensile stress generated in the working gas exhaust path can be relieved; when the exhaust flow path of the internal combustion engine expands thermally, pressure is applied to the first extending unit in the same direction as that of the thermal expansion and therefore tensile stress generated in the working gas supply path can be relieved.

In the heat energy recovery apparatus, the first extending unit may be a bellows which expands under pressure toward a flowing direction with the flowing-in of the working gas.

According to this heat energy recovery apparatus, when the heat exchanger expands thermally, the first extending unit (bellows) extends in the same direction as that of the thermal expansion and therefore tensile stress generated in the working gas exhaust path can be efficiently absorbed. When the exhaust flow path of the internal combustion engine expands thermally, the first extending unit (bellows) extends in the same direction as that of the thermal expansion and therefore tensile stress generated in the working gas supply path can be efficiently absorbed.

In the heat energy recovery apparatus, the heat exchanger may have a double pipe structure composed of a first flow path and a second flow path.

In the heat energy recovery apparatus, the heat exchanger may be disposed on an exhaust. The heat energy recovery apparatus may further include a working gas supply pipe which leads the working gas heat-received by the heat exchanger to the expander; a working gas supply path, generally parallel to a direction of the thermal expansion of the exhaust flow path, which is provided on at least one portion of the working gas supply pipe; a second extending unit, extensible in the same direction as that of the thermal expansion when the exhaust flow path expands thermally and tensile stress occurs in the working gas supply path with the thermal expansion of the exhaust flow path, which is provided on the working gas supply path; and a second shrinking unit, shrinkable in the same direction as that of the thermal expansion when the exhaust flow path expands thermally and compressive stress occurs in the working gas supply path with the thermal expansion of the exhaust flow path, which is provided on the working gas supply path.

According to this heat energy recovery apparatus, not only tensile stress or compressive stress in the working gas exhaust path, generated with thermal expansion of the heat exchanger can be absorbed; but also tensile stress or compressive stress in the working gas supply path, generated with thermal expansion of the exhaust flow path of the internal combustion engine can be absorbed.

The heat energy recovery apparatus according to the present invention, as described above, even when the exhaust flow paths of the heat exchanger and the internal combustion engine expand thermally, tensile stress or compressive stress generated in the working gas exhaust pipe of the compressor and in the working gas supply path of the expander can be absorbed or relieved and therefore bends, torsions, or the like generated in the working gas exhaust pipe and the working gas supply path can be suppressed. Furthermore, concurrently, bends, torsions, or the like generated in a connecting rod and crankshaft of the compressor and expander can also be suppressed. Consequently, according to the heat energy recovery apparatus of the present invention, strains generated in the heat energy recovery apparatus can be suppressed and therefore damages thereof can be avoided.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a view showing a configuration of a first embodiment of a heat energy recovery apparatus according to the present invention;
FIG. 2A is a P-V diagram for explaining a Brayton cycle engine;
FIG. 2B is a T-s diagram for explaining the Brayton cycle engine;
FIG. 3 is a view showing a configuration of a second embodiment of a heat energy recovery apparatus according to the present invention;
FIG. 4 is a cross-sectional view of a heat exchanger, taken along the line X-X in FIG. 3;
FIG. 5 is a view showing a configuration of a third embodiment of a heat energy recovery apparatus according to the present invention; and
FIG. 6 is a view showing a configuration of a fourth embodiment of a heat energy recovery apparatus according to the present invention.

### DETAILED DESCRIPTION OF THE PREFERRED EMBODIMENTS

Embodiments of heat energy recovery apparatus according to the present invention will be described below with reference to drawings in detail. In addition, the present invention is not limited by these embodiments.

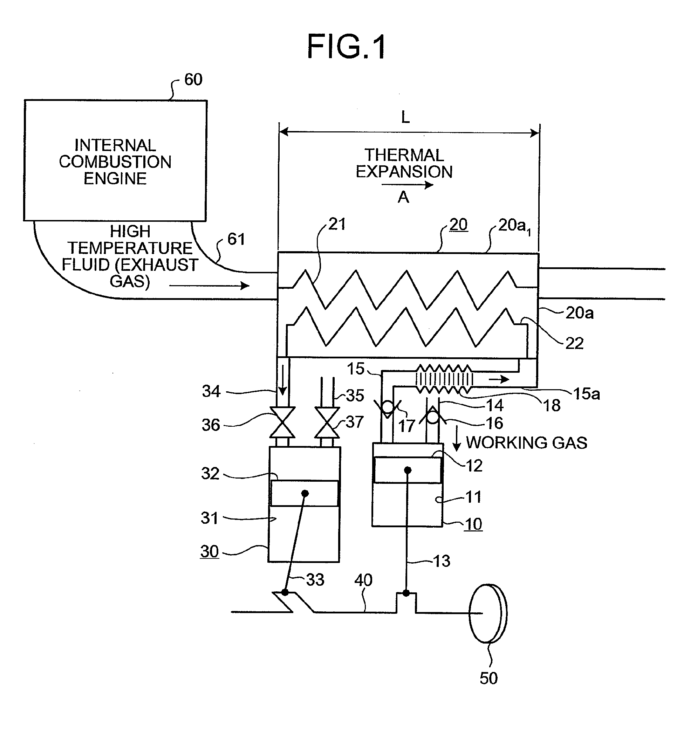

A heat energy recovery apparatus according to a first embodiment of the present invention will be described with reference to FIG. 1.

The heat energy recovery apparatus of the first embodiment is a Brayton cycle engine in which working fluid is processed using heat of high temperature fluid as follows: adiabatic compression → isobaric heat receiving → adiabatic expansion → isobaric heat radiation, thereby obtaining driving force. As shown in FIG. 1, the heat energy recovery apparatus includes a compressor 10 which adiabatically compresses suck-in working fluid, a heat exchanger 20 which makes the working fluid adiabatically compressed by the compressor 10 absorb heat of high temperature fluid under isobaric pressure, and an expander 30 which makes the working fluid isobarically heat-received by the heat exchanger 20 expand adiabatically.

Here, exhaust gas discharged from an internal combustion engine 60 shown in FIG. 1 is used as the high temperature fluid and exhaust heat of the exhaust gas is recovered to convert to mechanical energy. That is, the heat energy recovery apparatus exemplified here is an exhaust heat recovery apparatus that recovers exhaust heat of the internal combustion engine 60. Furthermore, the first embodiment explains with an example of gas such as air (referred to as "working gas" below) as the working fluid to be sucked into the compressor 10.

First, the heat exchanger 20 of the first embodiment will be described.

The heat exchanger 20 includes a first flow path 21 in which the high temperature fluid flows and a second flow path 22 in which working gas adiabatically compressed by the compressor 10 flows; both of which are placed inside a cylindrical housing 20a, for example. Here, it is preferable that the first and the second flow paths 21 and 22 are disposed so that a flowing direction of the high temperature fluid and a flowing direction of the working gas are opposed to each other as in the case of the first embodiment in order to enhance endothermic efficiency (heat exchanger efficiency) to the working gas.

Here, exhaust gas from the internal combustion engine 60 is used as the high temperature fluid and therefore the heat exchanger 20 of the first embodiment is disposed on an exhaust flow path 61 of the internal combustion engine 60 so that the exhaust gas flows into the first flow path 21. Here, it is preferable that the heat exchanger 20 is disposed at a position (on the upper stream side of the exhaust flow path 61) as close to a combustion chamber of the internal combustion engine 60 as possible in order to effectively use the exhaust heat of the exhaust gas. Consequently, the heat exchanger 20 of the first embodiment is disposed at an assembly portion of an exhaust manifold, for example.

Subsequently, the compressor 10 of the first embodiment will be described.

The compressor 10 includes a cylinder 11 whose volume V_{comp} is constant and a piston 12 that reciprocates in the cylinder 11. The piston 12 is coupled with a crankshaft 40 via a connecting rod 13. In addition, the crankshaft 40 is provided with a wheel 50. The compressor 10 of the first embodiment, as shown in FIG. 1, is disposed at a position spaced from an outer circumference 20a₁ of the housing 20a of the heat exchanger 20 and within a range of an axis line length L of the heat exchanger 20.

Furthermore, the compressor 10 includes a working gas supply pipe 14 which leads working gas with atmospheric pressure into the cylinder 11 and a working gas exhaust pipe 15 which leads working gas adiabatically compressed by the piston 12 in the cylinder 11 into the second flow path 22 of the heat exchanger 20. The working gas exhaust pipe 15 of the first embodiment is connected to the heat exchanger 20 on the outer circumference 20a₁ at the outlet side of the high temperature fluid in the heat exchanger 20.

Here, the working gas supply pipe 14 and the working gas exhaust pipe 15 are provided with an intake air side open/close valve 16 and an exhaust air side open/close valve 17, respectively. A check valve (intake air side reed valve) which makes the working gas flow into the cylinder 11 by inside pressure difference between the working gas supply pipe 14 and the cylinder 11 and at the same time prevents the working gas from back-flowing into the working gas supply pipe 14, is used as the intake air side open/close valve 16 of the first embodiment. Furthermore, a check valve (exhaust air side reed valve) which makes the working gas after adiabatically compressed flow into the second flow path 22 of the heat exchanger 20 by inside pressure difference between the working gas exhaust pipe 15 and the cylinder 11 and at the same time prevents the working gas from back-flowing into the cylinder 11, is used as the exhaust air side open/close valve 17 of the first embodiment.

Subsequently, the aforementioned expander 30 will be described.

The expander 30 includes a cylinder 31 whose volume Vₑₓₚ (here, Vₑₓₚ≥ V_{comp}) is constant and a piston 32 which reciprocates in the cylinder 31. The piston 32 is coupled with the crankshaft 40 which is the same as in the case of the compressor 10 via a connecting rod 33. The expander 30 of the first embodiment, as in the case of the aforementioned compressor 10, is disposed at a position spaced from an outer circumference 20a₁ of the housing 20a of the heat exchanger 20 and within the range of the axis line length L of the heat exchanger 20.

Furthermore, the expander 30 includes a working gas supply pipe 34 which leads working gas isobarically heat-received by the heat exchanger 20 into the cylinder 31 and a working gas exhaust pipe 35 which leads working gas after adiabatically compressed into outside the cylinder 31. The working gas exhaust pipe 35 of the first embodiment is connected to the heat exchanger 20 on the outer circumference 20a₁ at the inlet side of the high temperature fluid of the heat exchanger 20.

Here, the working gas supply pipe 34 and the working gas exhaust pipe 35 are provided with an intake air side open/close valve 36 and an exhaust air side open/close valve 37, respectively. As the intake air side open/close valve 36 and exhaust air side open/close valve 37 of the first embodiment, for example, a rotational synchronizing valve which performs open/close operation in synchronization with the rotation of the crankshaft 40 by means of a chain, sprocket, and the like is used.

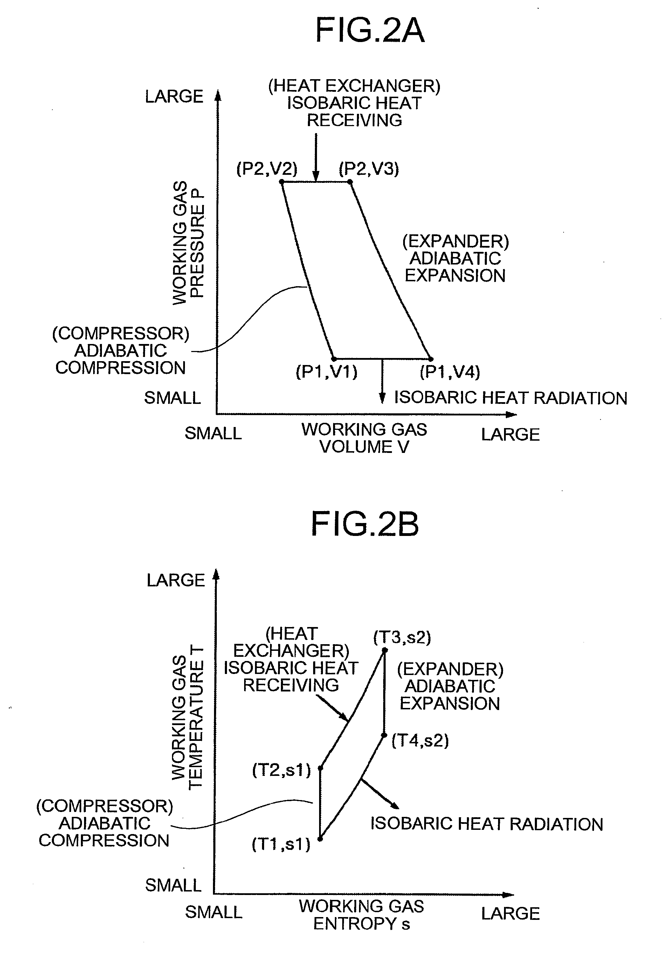

In this exhaust heat recovery apparatus, as shown in P-V diagram of FIG. 2A and T-s diagram of FIG. 2B, working gas with a pressure P1 (= atmospheric pressure) is sucked in the cylinder 11 of the compressor 10 from the working gas supply pipe 14 and the piston 12 adiabatically compresses working gas with a pressure P1, volume V1 (= V_{comp}), temperature T1, entropy s1 in the compressor 10. After that, the adiabatically compressed working gas with a pressure P2, volume V2, temperature T2, and entropy s1 is discharged from the working gas exhaust pipe 15 and is isobarically heat-received with exhaust heat of the exhaust gas by the heat exchanger 20.

Then, isobarically heat-received working gas with a pressure P2, volume V3, temperature T3, entropy s2 flows into the cylinder 31 of the expander 30 via the working gas supply pipe 34 and lowers the piston 32 while adiabatically compressing. Working gas after adiabatic expansion with a pressure P1, volume V4, temperature T4, entropy s2 is discharged (isobaric heat radiation) from the expander 30 via the working gas exhaust pipe 35.

In this exhaust heat recovery apparatus, exhaust heat of the exhaust gas is recovered in such a way and the crankshaft 40 is rotated in the adiabatic expansion stroke of the expander 30.

However, as described above, since the high temperature fluid (exhaust gas) flows into the heat exchanger 20 from the exhaust flow path 61 of the internal combustion engine 60, the housing 20a of the heat exchanger 20 is affected by the heat of the high temperature fluid to expand thermally. Then, when such a thermal expansion occurs, tensile stress and/or compressive stress occurs in the working gas exhaust pipe 15 of the compressor 10 and in the working gas supply pipe 34 of the expander 30, both are connected to the housing 20a; as described above, bends, torsions, or the like occur in the working gas exhaust pipe 15, working gas supply pipe 34, connecting rods 13 and 33, crankshaft 40, and the like. Furthermore, they may cause damages in certain tensile stress and/or compressive stress.

Consequently, a working gas exhaust path generally parallel to a direction of the thermal expansion of the heat exchanger 20 is provided on at least one portion of the working gas exhaust pipe 15 of the compressor 10 and at least one portion of the working gas supply pipe 34 of the expander 30 where tensile stress and/or compressive stress occur. Then, when tensile stress occurs in the working gas exhaust path, extending means, which is extensible in the same direction as that of the thermal expansion when the heat exchanger 20 expands thermally, is provided on the working gas exhaust path; and, when compressive stress occurs in the working gas exhaust path, shrinking means, which is shrinkable in the same direction as that of the thermal expansion when the heat exchanger 20 expands thermally, is provided on the working gas exhaust path.

As the extending means, for example, there may be considered a bellows which expands under pressure toward the flowing direction with the flowing-in of the working gas.

Furthermore, as the shrinking means, for example, a member such as a diaphragm, which is retractable according to the pressure of the working gas, is disposed in an accordion cylinder body in which the working gas flows; and the member is connected to a one end of the accordion cylinder body with an elastic member. Then, there may be considered a configuration in which the diaphragm retracts when the working gas flows into the cylinder body and the one end of the cylinder body is pulled to shrink.

The first embodiment explains with an example that the housing 20a of the heat exchanger 20 expands thermally in a direction marked by an arrow A in FIG. 1 (axis line direction of the housing 20a of the heat exchanger 20) to generate tensile stress in the working gas exhaust pipe 15 of the compressor 10 in the direction of the arrow A. Consequently, in the first embodiment, as shown in FIG. 1, a working gas exhaust path 15a generally parallel to the direction of the thermal expansion (the arrow A) is provided in the working gas exhaust pipe 15 and a bellows 18, which is able to expand under pressure toward the direction of the arrow A as the compressed working gas flows in, is provided on the working gas exhaust path 15a as the extending means.

Here, the bellows 18 of the first embodiment uses one having set so that an amount of extension of the housing 20a toward the direction of the arrow A during the thermal expansion is previously determined by experiments or simulation and expansion under pressure is performed by an amount of extension capable of counterbalancing the amount of extension of the housing 20a when the compressed working gas flows in.

Thereby, the high temperature fluid (exhaust gas) flows into the heat exchanger 20; and, when the housing 20a of the heat exchanger 20 expands thermally by the heat of the high temperature fluid toward the direction of the arrow A, compressed working gas generated by the compressor 10 flows into the bellows 18 and therefore the bellows 18 expands under pressure toward the direction of the arrow A. That is, when the housing 20a extends toward the direction of the arrow A by the thermal expansion, the bellows 18 extends by generally the same level of the amount of extension by the expansion under pressure.

As described above, according to the first embodiment, the compressed working gas of the compressor 10 flows into the bellows 18 to expand under pressure toward the same direction as in the case of the tensile stress of the working gas exhaust pipe 15, whereby the tensile stress of the working gas exhaust pipe 15, which occurs with the thermal expansion of the heat exchanger 20, can be absorbed. Consequently, strains generated in the exhaust heat recovery apparatus, such as bends and torsions of the working gas exhaust pipe 15, connecting rod 13, and crankshaft 40 can be suppressed and damages thereof can be avoided.

Here, in the first embodiment, the bellows 18 which expands under pressure toward the flowing direction with the flowing-in of the working gas (that is, extending in the same direction as in the case of the thermal expansion of the heat exchanger 20) is described as an example of the extending means, but the extending means is not necessarily limited to only the bellows 18.

For example, as the extending means, there may be used one in which pressure is applied in the extension direction of the extending means (the same direction as in the case of the thermal expansion of the heat exchanger 20) with the flowing-in of the working gas. According to this, when the heat exchanger 20 expands thermally, the pressure is applied to the extending means in the same direction as in the case of the thermal expansion; and therefore, tensile stress which occurs in the working gas exhaust pipe 15 can be relieved, whereby strains generated in the exhaust heat recovery apparatus can be suppressed and damages thereof can be avoided. That is, it can exhibit the same effects as in the case of the bellows 18 without actually extending as the aforementioned bellows 18. Such extending means is especially effective when there occurs a little thermal expansion in the heat exchanger 20.

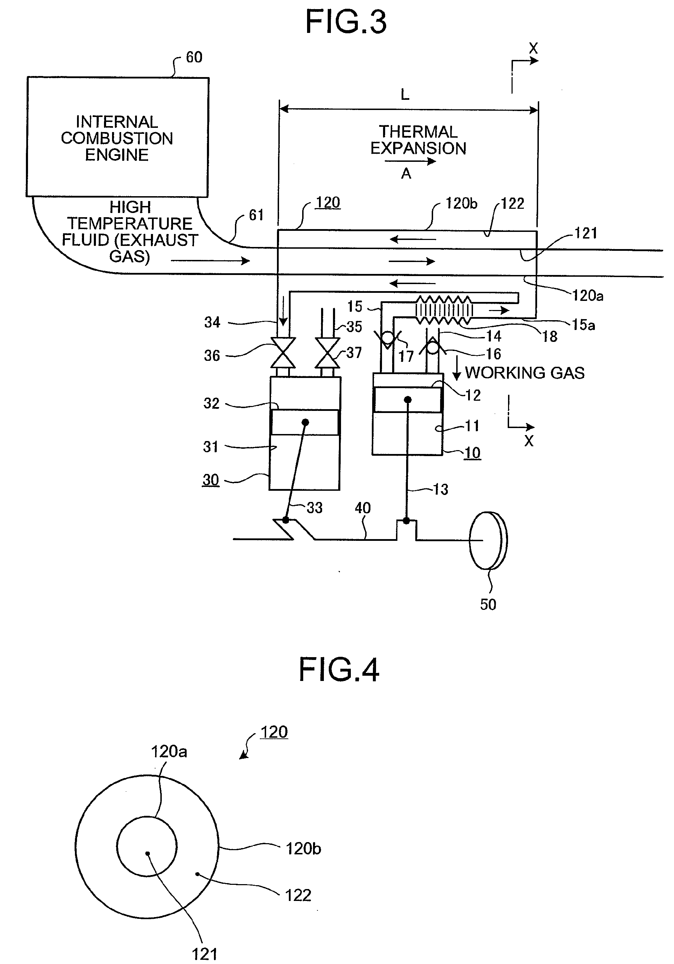

A heat energy recovery apparatus according to a second embodiment of the present invention will be described with reference to FIG. 3 and FIG. 4. In addition, here, also as the heat energy recovery apparatus, an exhaust heat recovery apparatus which recovers exhaust heat of an internal combustion engine 60 will be explained with an example.

The exhaust heat recovery apparatus of the second embodiment is one in which the heat exchanger 20 is replaced with a heat exchanger 120 shown in FIG. 3, in the heat energy recovery apparatus of the aforementioned first embodiment.

Specifically, the heat exchanger 120 of the second embodiment includes a first flow path 121 in which high temperature fluid (exhaust gas) flown in from the exhaust flow path 61 of the internal combustion engine 60 flows and a second flow path 122 in which working gas adiabatically compressed by the compressor 10 flows.

The heat exchanger 120, as shown in FIG. 3 and FIG. 4, includes a cylindrical first interconnecting piping 120a which communicates with the exhaust flow path 61 of the internal combustion engine 60 and a second interconnecting piping 120b which is generally concentrically disposed on the first interconnecting piping 120a and has its inner diameter larger than the outer diameter of the first interconnecting piping 120a; the inside of the first interconnecting piping 120a is used as the first flow path 121 and the space between the outer circumference surface of the first interconnecting piping 120a and the inner circumference surface of the second interconnecting piping 120b is used as the second flow path 122.

Here, also in the second embodiment, the first and the second flow paths 121 and 122 are disposed so that a flowing direction of the high temperature fluid and a flowing direction of the working gas are opposed to each other in order to enhance endothermic efficiency (heat exchanger efficiency) to the working gas. Furthermore, also in the second embodiment, it is preferable that the heat exchanger 120 is disposed at a position (on the upper stream side of the exhaust flow path 61) as close to a combustion chamber of the internal combustion engine 60 as possible in order to effectively use the exhaust heat of the high temperature fluid (exhaust gas) and consequently the heat exchanger 120 is disposed at an assembly portion of an exhaust manifold, for example.

The second embodiment is disposed to the thus configured heat exchanger 120 in the position relationship equivalent to the first embodiment, that is, the compressor 10 and the expander 30 are disposed at a position spaced from the second interconnecting piping 120b of the heat exchanger 120 and within a range of an axis line length L of the heat exchanger 120.

The compressor 10 and the expander 30, as in the case of the first embodiment, include the working gas exhaust pipe 15 and the working gas supply pipe 34, respectively, both of which are connected to the heat exchanger 120.

Here, the second embodiment also explains with an example that the second interconnecting piping 120b of heat exchanger 120 expands thermally in a direction marked by an arrow A in FIG. 3 (axis line direction of the second interconnecting piping 120b) to generate tensile stress in the working gas exhaust pipe 15 of the compressor 10 in the direction marked by the arrow A. Consequently, also in the second embodiment, the working gas exhaust path 15a generally parallel to the direction of the thermal expansion (the arrow A) of the heat exchanger 120 is provided in the working gas exhaust pipe 15 of the compressor 10 and the bellows 18, which is able to expand under pressure in the direction of the arrow A as the compressed working gas flows in, is provided on the working gas exhaust path 15a.

Thereby, the high temperature fluid (exhaust gas) flows into the heat exchanger 120; and, when the second interconnecting piping 120b of the heat exchanger 120 expands thermally by the heat of the high temperature fluid toward the direction of the arrow A, as in the case of the aforementioned first embodiment, compressed working gas generated by the compressor 10 flows into the bellows 18 and therefore the bellows 18 expands under pressure toward the direction of the arrow A. That is, when the second interconnecting piping 120b extends toward the direction of the arrow A by the thermal expansion, the bellows 18 extends by generally the same level of the amount of extension by the expansion under pressure.

As described above, also in the second embodiment, the compressed working gas of the compressor 10 flows into the bellows 18 to expand under pressure toward the same direction of the tensile stress; whereby the tensile stress of the working gas exhaust pipe 15 which occurs with the thermal expansion of the heat exchanger 120 can be absorbed. Consequently, strains generated in the exhaust heat recovery apparatus, such as bends, torsions, or the like in the working gas exhaust pipe 15, connecting rod 13, and crankshaft 40 can be suppressed and damages thereof can be avoided.

Further, the heat exchanger 120 of the second embodiment is of a simple and downsizable double pipe structure composed of the concentrically disposed first interconnecting piping 120a and the second interconnecting piping 120b and therefore the exhaust heat recovery apparatus can be disposed with ease even in a small mounting space.

In addition, the heat exchanger 120 of the second embodiment is configured by the first interconnecting piping 120a which is a different member from other components, and the second interconnecting piping 120b; however, the exhaust flow path 61 of the internal combustion engine 60 may be directly used as the first interconnecting piping 120a. That is, the heat exchanger 120 of the second embodiment may be configured by covering the second interconnecting piping 120b around the exhaust flow path 61 of the internal combustion engine 60.

Here, also in the second embodiment, in place of the bellows 18, there may be used extending means to which pressure is applied in the same direction of the thermal expansion of the heat exchanger 120 with the flowing-in of the working gas exemplified in the aforementioned first embodiment; this can also exhibit the same effects as in the case of applying the bellows 18.

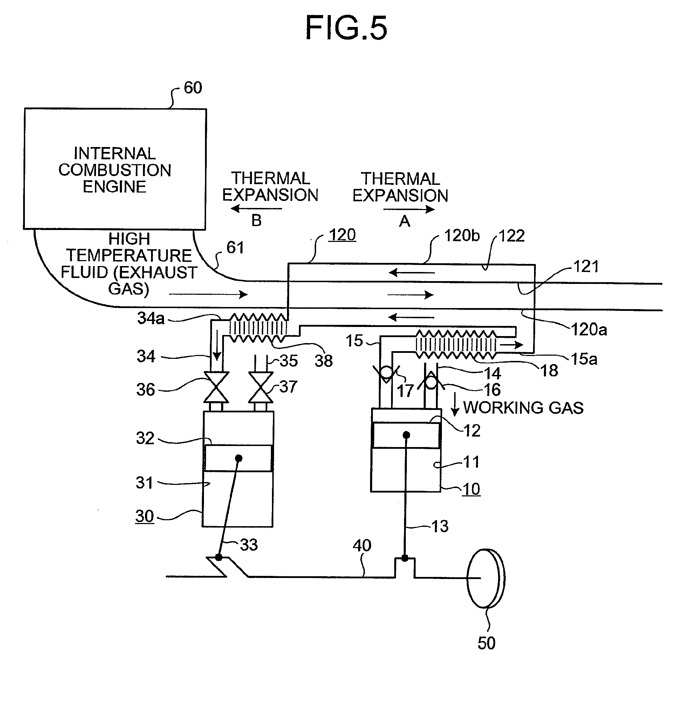

A heat energy recovery apparatus according to a third embodiment of the present invention will be described with reference to FIG. 5. In addition, here, also as the heat energy recovery apparatus, an exhaust heat recovery apparatus which recovers exhaust heat of an internal combustion engine 60 will be explained with an example.

Here, exhaust gas having temperature higher than that of a heat exchanger 120 flows into an exhaust flow path 61 of the internal combustion engine 60 side and thermal expansion occurs is such a portion. Therefore, for example, in the exhaust heat recovery apparatus of the aforementioned second embodiment, when a relative position relationship between the exhaust flow path 61 and the expander 30 of the exhaust heat recovery apparatus and the working gas supply pipe 34 thereof is fixed, tensile stress and/or compressive stress occur in the working gas supply pipe 34 of the expander 30 with the thermal expansion of the exhaust flow path 61 of the internal combustion engine 60.

Consequently, considering the effects of the thermal expansion in the exhaust flow path 61 of the internal combustion engine 60, the exhaust heat recovery apparatus of the third embodiment, in the exhaust heat recovery apparatus of the aforementioned second embodiment, includes a working gas supply path, which is generally parallel to a direction of the thermal expansion of the exhaust flow path 61, is provided on at least one portion of the working gas supply pipe 34 where tensile stress and/or compressive stress occur. Then, when tensile stress occurs in the working gas supply path, extending means, which is extensible in the same direction as that of the thermal expansion when the exhaust flow path 61 expands thermally, is provided on the working gas supply path; and, when compressive stress occurs in the working gas supply path, shrinking means, which is shrinkable in the same direction as that of the thermal expansion when the exhaust flow path 61 expands thermally, is provided on the working gas supply path.

The third embodiment explains with an example that the exhaust flow path 61 of the internal combustion engine 60 expands thermally in a direction marked by an arrow B in FIG. 5 to generate tensile stress in working gas supply pipe 34 of the expander 30 in the direction marked by the arrow B. Therefore, in the third embodiment, as shown in FIG. 5, the expander 30 is disposed on the side of the exhaust flow path 61 of the internal combustion engine 60 than the heat exchanger 120 in the axis line direction thereof; and a working gas supply path 34a generally parallel to the direction of the thermal expansion (the arrow B) of the exhaust flow path 61 is provided in the working gas supply pipe 34. Then, a bellows 38, which is able to expand under pressure toward the direction of the arrow B as the compressed working gas flows in, is provided on the working gas supply path 34a as the extending means.

Here, the bellows 38 of the third embodiment is set so that an amount of extension of the exhaust flow path 61 of the internal combustion engine 60 toward the direction of the arrow B during the thermal expansion is previously determined by experiments or simulation and expansion under pressure is performed by an amount of extension capable of counterbalancing the amount of extension of the exhaust flow path 61 when the compressed working gas flows in.

Thereby, when the exhaust flow path 61 of the internal combustion engine 60 expands thermally toward the direction of B, compressed working gas flown into the working gas supply pipe 34 of the expander 30 via the second flow path 122 of the heat exchanger 120 flows into the bellows 38 and therefore the bellows 38 expands under pressure toward the direction of the arrow B. That is, when the exhaust flow path 61 extends toward the direction of the arrow B by the thermal expansion, the bellows 38 extends by generally the same level of the amount of extension by the expansion under pressure.

As described above, according to the third embodiment, the compressed working gas flows into the bellows 38 to expand under pressure toward the same direction as in the case of the tensile stress of the working gas supply pipe 34, whereby the tensile stress of the working gas supply pipe 34, which occurs with the thermal expansion of the exhaust flow path 61 of the internal combustion engine 60, can be absorbed. Consequently, even when a relative position relationship between the exhaust flow path 61 of the internal combustion engine 60 and the expander 30 of the exhaust heat recovery apparatus and the working gas supply pipe 34 thereof is fixed, strains generated in the exhaust heat recovery apparatus, such as bends and torsions in the working gas supply pipe 34, connecting rod 33, and crankshaft 40 can be avoided and damages thereof can be avoided.

In addition, in the third embodiment, although the second interconnecting piping 120b of the heat exchanger 120 also expands thermally toward the direction of the arrow A, at that time, the bellows 18 provided in the working gas exhaust pipe 15 of the compressor 10 expands under pressure as the compressed working gas flows in, whereby strains generated in the exhaust heat recovery apparatus, such as bends and torsions in the working gas exhaust pipe 15, connecting rod 13, and crankshaft 40 of the compressor 10 side can be avoided and damages thereof can be avoided.

Here, also in the third embodiment, in place of the bellows 18 provided in the working gas exhaust pipe 15 of the compressor 10, there may be used extending means to which pressure is applied in the same direction of the thermal expansion of the heat exchanger 120 with the flowing-in of the working gas exemplified in the aforementioned first embodiment; this can also exhibit the same effects as in the case of applying the bellows 18.

Furthermore, similar to this, in place of the bellows 38 provided in the working gas supply pipe 34 of the expander 30, there may be provided extending means in the working gas supply pipe 34, to which pressure is applied in the same direction of the thermal expansion of the exhaust flow path 61 of the internal combustion engine 60 with the flowing-in of the working gas. According to this, when the exhaust flow path 61 expands thermally, pressure is applied to the extending means in the same direction as in the case of the thermal expansion; and therefore, tensile stress which occurs in the working gas supply pipe 34 can be relieved, whereby strains generated in the exhaust heat recovery apparatus can be suppressed and damages thereof can be avoided. That is, it can exhibit the same effects as in the case of the bellows 38 without actually extending as the aforementioned bellows 38. Such extending means is especially effective when there occurs a little thermal expansion in the exhaust flow path 61.

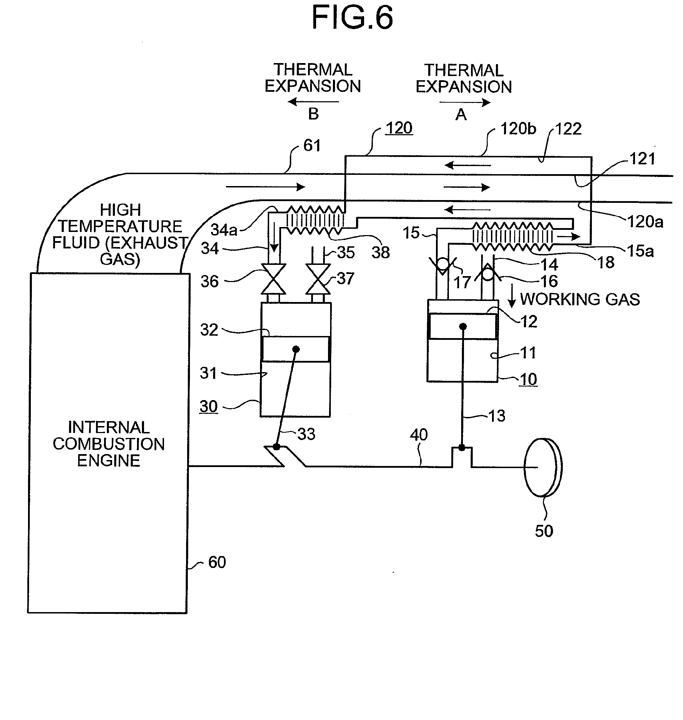

A heat energy recovery apparatus according to a fourth embodiment of the present invention will be described with reference to FIG. 6. In addition, also here, as the heat energy recovery apparatus, an exhaust heat recovery apparatus which recovers exhaust heat of an internal combustion engine 60 will be explained with an example.

In the aforementioned third embodiment, it is explained with an example when a relative position relationship between the exhaust flow path 61 of the internal combustion engine 60 and the expander 30 of the exhaust heat recovery apparatus and the working gas supply pipe 34 thereof is fixed; however in the fourth embodiment, it is explained with an example when a relative position relationship between the internal combustion engine 60 and the crankshaft 40 of the exhaust heat recovery apparatus is fixed. That is, in the fourth embodiment, it is explained with an example when the crankshaft of the internal combustion engine 60 and the crankshaft 40 of the exhaust heat recovery apparatus are shared or the respective crankshafts are connected via a chain or a sprocket.

Also in such a case, when exhaust gas flows into the exhaust flow path 61 of the internal combustion engine 60 and the exhaust flow path 61 expands thermally toward the direction of the arrow B, the compressed working gas flown into the working gas supply pipe 34 of the expander 30 from the heat exchanger 120 flows into the bellows 38; and the bellows 38 expands under pressure toward the direction of the arrow B, whereby the tensile stress of the working gas supply pipe 34 which occurs with the thermal expansion of the exhaust flow path 61 of the internal combustion engine 60 can be absorbed. Consequently, even when a relative position relationship between the internal combustion engine 60 and the crankshaft 40 of the exhaust heat energy recovery apparatus is fixed, strains generated in the exhaust heat energy recovery apparatus, such as bends and torsions in the working gas supply pipe 34, connecting rod 33, and crankshaft 40 can be avoided and damages thereof can be avoided.

Furthermore, when the exhaust gas flows into the heat exchanger 120 and the second interconnecting piping 120b of the heat exchanger 120 expands thermally toward the direction of the arrow A, the compressed working gas generated by the compressor 10 flows into the bellows 18 and the bellows 18 expands under pressure toward the direction of the arrow A, whereby tensile stress of the working gas exhaust pipe 15 which occurs with the thermal expansion of the second interconnecting piping 120b of the heat exchanger 120 can be absorbed. Consequently, strains generated in the exhaust heat recovery apparatus, such as bends and torsions in the working gas exhaust pipe 15, connecting rod 13, crankshaft 40 of the compressor 10 side can be avoided and damages thereof can be avoided.

Here, also in the fourth embodiment, in place of the bellows 18 provided in the working gas exhaust pipe 15 of the compressor 10, there may be used extending means to which pressure is applied in the same direction of the thermal expansion of the heat exchanger 120 with the flowing-in of the working gas exemplified in the aforementioned first embodiment; this can also exhibit the same effects as in the case of applying the bellows 18. Furthermore, in place of the bellows 38 provided in the working gas supply pipe 34 of the expander 30, there may be provided extending means to which pressure is applied in the same direction of the thermal expansion of the exhaust flow path 61 of the internal combustion engine 60 with the flowing-in of the working gas exemplified by the aforementioned third embodiment; this can also exhibit the same effects as in the case of applying the bellows 38.

As described above, the heat energy recovery apparatus according to the present invention is suitable for technology which absorbs or relieves tensile stress or compressive stress applied to the heat energy recovery apparatus, the stresses being generated with the thermal expansion of the heat source, and suppresses strains thereof.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

A heat energy recovery apparatus includes a compressor (10); a heat exchanger (20; 120); an expander (30); a working gas exhaust pipe (15) which leads the working gas compressed by the compressor (10) to the heat exchanger (20; 120); a working gas exhaust path (15a) generally parallel to a direction of the thermal expansion of the heat exchanger (20; 120); an extending unit (18) extensible in the same direction as that of the thermal expansion when the heat exchanger (20; 120) expands thermally and tensile stress occurs in the working gas exhaust path (15a) with the thermal expansion of the heat exchanger (20; 120); and a shrinking unit (18) shrinkable in the same direction as that of the thermal expansion when the heat exchanger (20; 120) expands thermally and compressive stress occurs in the working gas exhaust path (15a) with the thermal expansion of the heat exchanger (20; 120).

## Claims

1. A heat energy recovery apparatus, comprising:
a compressor (10) which has a piston (12) for compressing sucked-in working gas;
a heat exchanger (20; 120) which makes the working gas compressed by the compressor (10) absorb heat of high temperature fluid;
an expander (30) which has a piston (32) to be moved under pressure by expansion of the heat-absorbed working gas;
a working gas exhaust pipe (15) which leads the working gas compressed by the compressor (10) to the heat exchanger (20; 120);
a working gas exhaust path (15a), generally parallel to a direction of the thermal expansion of the heat exchanger (20; 120), which is provided on at least one portion of the working gas exhaust pipe (15);
a first extending unit (18), extensible in the same direction (A) as that of the thermal expansion when the heat exchanger (20; 120) expands thermally and tensile stress occurs in the working gas exhaust path (15a) with the thermal expansion of the heat exchanger (20; 120), which is provided on the working gas exhaust path (15a); and
a first shrinking unit (18), shrinkable in the same direction (A) as that of the thermal expansion when the heat exchanger (20; 120) expands thermally and compressive stress occurs in the working gas exhaust path (15a) with the thermal expansion of the heat exchanger (20; 120), which is provided on the working gas exhaust path (15a).

2. The heat energy recovery apparatus according to claim 1, wherein the first extending unit (18) is pressured in an extension direction of the first extending unit (18) with the flowing-in of the working gas.

3. The heat energy recovery apparatus according to claim 1 or 2, wherein the first extending unit (18) is a bellows which expands under pressure toward a flowing direction with the flowing-in of the working gas.

4. The heat energy recovery apparatus according to any one of claims 1 to 3, wherein the heat exchanger (20; 120) is disposed on an exhaust flow path (61) of an internal combustion engine (60), and the heat energy recovery apparatus further comprises:
a working gas supply pipe (34) which leads the working gas heat-received by the heat exchanger (20; 120) to the expander (30);
a working gas supply path (34a), generally parallel to a direction (B) of the thermal expansion of the exhaust flow path (61), which is provided on at least one portion of the working gas supply pipe (34);
a second extending unit (38), extensible in the same direction (B) as that of the thermal expansion when the exhaust flow path (61) expands thermally and tensile stress occurs in the working gas supply path (34a) with the thermal expansion of the exhaust flow path (61), which is provided on the working gas supply path (34a); and
a second shrinking unit (38), shrinkable in the same direction (B) as that of the thermal expansion when the exhaust flow path (61) expands thermally and compressive stress occurs in the working gas supply path (34a) with the thermal expansion of the exhaust flow path (61), which is provided on the working gas supply path (34a).

5. The heat energy recovery apparatus according to claim 4, wherein the second extending unit (38) is pressured in an extension direction of the second extending unit (38) with the flowing-in of the working gas.

6. The heat energy recovery apparatus according to claim 4 or 5, wherein the second extending unit (38) is a bellows which expands under pressure toward a flowing direction with the flowing-in of the working gas.

7. The heat energy recovery apparatus according to any one of claims 1 to 6, wherein the heat exchanger (20; 120) has a double pipe structure composed of a first flow path (121) and a second flow path (122).
